# EUROPÄISCHE PATENTSCHRIFT

(11) **EP 2 882 544 B1**
(45) Veröffentlichungstag und Bekanntmachung des Hinweises auf die Patenterteilung: **28.09.2016**
(21) Anmeldenummer: 13750847.9
(22) Anmeldetag: 08.08.2013
(51) Int. Cl.: B21C 51/00, G01B 11/12, G01B 11/24, G01S 17/89, B23K 9/095

(54) **VERFAHREN UND VORRICHTUNG ZUR OPTISCHEN INNEN-VERMESSUNG EINES ROHRES**
METHOD AND DEVICE FOR OPTICALLY MEASURING THE INTERIOR OF A PIPE
DISPOSITIF ET PROCÉDÉ POUR LA MESURE INTÉRIEURE OPTIQUE D'UN TUBE

(30) Priorität: 10.08.2012 DE 102012015807
(43) Veröffentlichungstag der Anmeldung: 17.06.2015
(73) Patentinhaber: SMS group GmbH, 40237 Düsseldorf (DE)
(72) Erfinder: KRAUHAUSEN, Michael, 52066 Aachen (DE); NEUGEBAUER, Rüdiger, 40235 Düsseldorf (DE); KOLBE, Manfred, 41061 Mönchengladbach (DE); TOPÜTH, Manfred, 41849 Wassenberg (DE); PESCH, Norbert, 41239 Mönchengladbach (DE); SCHULZE, Alexander, 44388 Dortmund (DE); VOCHSEN, Jochen, 41812 Erkelenz (DE); OBERWELLAND, Heinrich, 41812 Erkelenz (DE)
(74) Vertreter: Grosse, Wolf-Dietrich Rüdiger
(86) Internationale Anmeldenummer: PCT/EP2013/002375
(87) Internationale Veröffentlichungsnummer: WO 2014/023430

(56) Entgegenhaltungen:
- EP-B1- 1 500 904
- DE-A1-102005 012 107
- KR-A- 20110 094 449
- US-A1- 2008 084 558
- US-A1- 2011 100 965

## Beschreibung

Die Erfindung betrifft ein Verfahren zur optischen Innen-Vermessung eines durch Walzen hergestellten nahtlosen Rohres oder eines aus zu Halbschalen umgeformten Blechtafeln oder aus einer umgeformten Blechtafel oder aus einem vom Coil abgewickelten Metallband hergestellten längsnahtgeschweißten Rohres, umfassend ein im Inneren des Rohres einen Laserstrahl aussendendes Sensormittel.

Zur Messung der Geradheit, des Durchmessers und der Unrundheit eines Rohres ist es bekannt, berührungslose Messeinrichtungen, beispielsweise Lasermesssysteme einzusetzen, die das Rohr von außen mit mehreren in definierten Abständen angeordneten Lasern - über die Länge des Rohres verteilt werden dabei zehn oder mehr Lasersensoren eingesetzt - vermessen.

Das Rohr muss dazu auf einer Drehvorrichtung gedreht werden. Die Geradheit und die mögliche Ovalität werden aus den ermittelten Messwerten errechnet. Abgesehen davon, dass aufwändig komplexe Laserbatterien aufgebaut werden müssen bzw. erforderlich sind, ist es damit nicht möglich, die Rohrinnenkontur und bei einem längsnahtgeschweißten Rohr zusätzlich die vorhandene Innenschweißnaht über die gesamte Rohrlänge zu vermessen.

Die US 2008/084558 A1 offenbart ein Verfahren zur optischen Innen-Vermessung einer Kavität, zum Beispiel eines Hohlraums eines Flugzeugsflügels unter Verwendung eines "Tracking Mechanism" und eines "Scanning Mechanism". Die DE 10 2005 012107 A1 D1 beschreibt ein Verfahren auf dem Gebiet des Tunnelbaus. Die KR 2011 0094449 beschreibt ein Verfahren zur Innen-Vermessung eines Rohres mit einem Lasertracker, der die Position eines Reflektors ermittelt, wobei der Reflektor mit einem rotierenden Näherungssensor rotiert.

Durch die DE 10 2011 009 660 B4 wird eine Vorrichtung und ein Verfahren zum Umformen von Flachprodukten in Schlitzrohre oder Rohrvorprodukte zur Verfügung gestellt, welche eine ständige Überprüfung und schließlich auch Automatisierung des Vorgangs selbst weitestgehend unabhängig von der Dicke und den Materialeigenschaften des umzuformenden Flachproduktes ermöglichen.

Dabei sind eine Lichtquelle und wenigstens ein Empfänger mit zumindest einem Innenumformwerkzeug verbunden und dienen zur Messung der Schlitzrohr- oder Rohrvorprodukt-Innenkontur. Bevorzugt werden hierbei eine Laserquelle und ein Laserdetektor eingesetzt.

Es liegt damit eine Vorrichtung vor, die mit genau arbeitenden Mitteln eine präzise Überprüfung der jeweiligen Umformschritte bis hin zur schlussendlichen Überprüfung der Innenkontur des Schlitzrohrquerschnitts erlaubt. In Abhängigkeit von den ermittelten Messergebnissen kann dann jede lokale, schrittweise Umformung oder der gesamte Umformprozeß vorzugsweise online und automatisiert umgehend überprüft werden und gegebenenfalls eine Nachjustierung der Einstellungsparameter der Bearbeitungsmaschine erfolgen.

Mit dieser lasergestützten Innen-Vermessung kann der schrittweise Umformvorgang überwacht, d. h. die Innenseite des Schlitzrohres an einer bestimmten Position über die Rohrlänge vermessen werden, explizit aber nur in einer Rohrformpresse mit Innenwerkzeug, in der durch radiales Umformen des Flachproduktes ein Schlitzrohr erzeugt wird.

Bei der Herstellung eines nahtlosen Rohres, wobei ein Vorblock über einen Dorn und/oder eine Walzstange gewalzt wird, oder bei der Herstellung eines längsnahtgeschweißten Rohres, wozu beispielsweise zwei aus Blechtafeln umgeformte Halbschalen miteinander verschweißt werden, kann die bekannte lasergestützte Innen-Vermessung nicht eingesetzt werden.

Denn zum einen ist während des Walzvorgangs aufgrund des nicht vorhandenen Freiraums und natürlich der enormen Temperaturen eine stetige Innenvermessung unmöglich. Zum anderen wird beim Zusammenfügen der beiden Halbschalen und deren anschließendem Verschweißen miteinander kein Innenumformwerkzeug verwendet.

Der Erfindung liegt daher die Aufgabe zugrunde, ein Verfahren der eingangs genannten Art für eine Innen-Vermessung von nahtlosen oder längsnahtgeschweißten Rohren zu schaffen, mit denen sich auf einfache Weise in einer Station Ovalität und Geradheit des Rohres exakt bestimmen und abbilden lassen.

Diese Aufgabe wird mit einem Verfahren erfindungsgemäß dadurch gelöst, dass das Sensormittel durch das Rohr hindurch horizontal verfahren wird, wobei die Innenkontur des Rohres vermessen wird, indem ein am Verfahrwegende in fixer Position dem Sensormittel linear gegenüberliegend vorgesehener Lasertracker mit seinem Laserstrahl die jeweilige Position des Sensormittels im Raum des Rohres verfolgt und Abweichungen des Sensormittels von der Geradheit erfasst, wobei der Laserstrahl von einem am Sensormittel angeordneten Reflektor zurück zum Lasertracker reflektiert wird.

Das Sensormittel, vorzugsweise ein permanent um die eigene Achse drehender bzw. rotierender Sensorkopf, weist eine Laserquelle und einen Laserdetektor auf, über die bei einer horizontalen Vorwärts- oder auch Rückwärtsbewegung des Sensormittels innerhalb des Rohres die Innenkontur in Schritten oder auch kontinuierlich erfasst und somit die Rundheit oder Ovalität des Rohres vermessen wird, wobei die Rohrinnenkontur mittels des Triangulationsverfahrens oder des Laufzeitverfahrens ermittelt werden kann.

Wenn sich das mit der Laserquelle und dem Laserdetektor bestückte Sensormittel durch das Rohr hindurch bewegt, verfolgt der Laserstrahl des Lasertrackers automatisch die jeweils aktuelle Position des Sensormittels, während die Ausrichtung des Lasertrackers mit Drehgebern in zwei winkeln gemessen wird. Der Lasertracker erkennt immer die genaue X-, Y- Z-Position des Sensormittels im Raum und weiß, wo sich dessen Mitte befindet.

Ändert sich der Abstand der Innenwandung zum Sensormittel, z. B. wenn eine Ovalität bezogen auf den Umfang des Rohres oder eine Krümmung bzw. Biegung des Rohres bezogen auf seine Längsachse vorliegt oder das Sensormittel von seinem idealen Pfad abkommt, wird eine solche Abstandsänderung von dem Lasermittel gemessen, das durch eine Kombination mit der Laser-Distanzmessung präzise die Position des Sensormittels bezogen auf die fixe Position des Lasertrackers erfasst.

Es lässt sich somit eine komplette 3D-Vermessung des Rohres in einer Messstation durch Erfassen des gesamten Querschnitts und der Längsform erreichen, insbesondere von Großrohren.

Mit dem vorstehend beschriebenen Verfahren kann zusätzlich zu der präzisen Vermessung der Innengeometrie des Rohres vorzugsweise auch die Kontur und insbesondere die lückenlose Durchgängigkeit der Innenschweißnaht eines längsnahtgeschweißten Rohres überprüft werden.

Die der Erfindung zugrundeliegende Aufgabe wird mit einer nicht beanspruchten Vorrichtung gelöst, mit einem Sensormittel, das auf einem sich durch das Rohr bewegenden Transportmittel angeordnet ist und an der der Einfahrseite des Transportmittels gegenüberliegenden Rohrstirnseite ein Lasertracker vorgesehen ist, dessen Laserstrahl mit einem auf dem Sensormittel vorgesehenen Reflektor korrespondiert.

Das Transportmittel, z. B. ausgebildet als Wagen oder Schlitten, wird vorzugsweise über eine Schubstange als Schubmittel, die von einem hydraulisch/pneumatisch beaufschlagten Zylinder oder einem Motor betätigt werden kann, waagerecht in das zu vermessende Rohr hineinbewegt, wobei das Rohr ortsfest auf zu dem Rohrdurchmesser komplementären Lagerböcken aufliegt. Als Sensormittel wird ein rotierender Sensorkopf, optional mehrere Laserlichtschnittsensoren, bevorzugt.

Während der linearen Vorschubbewegung des mit dem Sensorkopf bestückten Transportmittels rotiert der mit der Laserquelle und dem Laserdetektor ausgebildete Sensorkopf permanent um seine eigene Achse, wobei die von der Laserquelle emmitierten Laserstrahlen kontinuierlich den gesamten Innenquerschnitt und gegebenenfalls eine vorhandene Schweißnaht des Rohres überstreichen. Der Laserstrahl verfolgt fortlaufend die Position des Reflektors. Somit erfolgt eine koordinative Positionsbestimmung des Sensorkopfes innerhalb des Rohres, wodurch einerseits ein sich ändernder Abstand der Innenkontur zum Sensorkopf und andererseits die sich ändernde Position zwischen dem Lasertracker und dem sich über das Transportmittel in horizontaler Richtung vor- und zurückbewegenden Sensorkopf bzw. -mittel gemessen wird.

Die Detektion und Auswertung der von der Innenkontur und/oder der Schweißnaht des Rohres rückgestreuten Laserstrahlen erfolgt durch einen Empfänger und vorzugsweise mit einer Umwandlungseinheit, wodurch sich die Innenkontur abbilden lässt.

Durch die Kombination von Laservermessung mittels des Sensormittels und koordinativer Positionsbestimmung mit dem Lasertracker wird eine 3D-Vermessung der Rohrinnenkontur erreicht, die sich auf einem Bildschirm darstellen lässt.

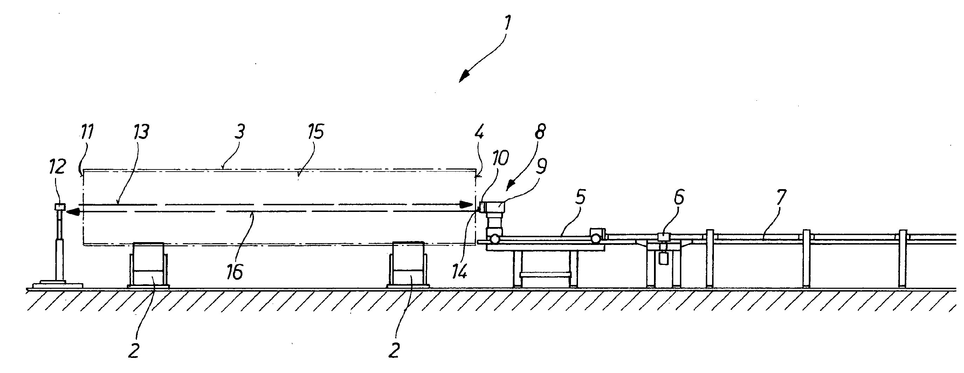

Weitere Merkmale und Einzelheiten der Erfindung ergeben sich aus den Ansprüchen und der nachfolgenden Beschreibung eines in der einzigen Zeichnung schematisch dargestellten Ausführungsbeispiels der Erfindung.

Die Figur zeigt eine Messstation 1 zur Innenvermessung von nahtlos gewalzten oder längsnahtgeschweißten Rohren, die der Fertigungsfinie nachgeschaltet ist.

Die Messstation 1 umfasst zwei Lagerböcke 2, deren Aufnahmen dem Außendurchmesser eines darauf fest aufliegenden, zu vermessenden Rohres 3 angepasst sind.

An der rechten Stirnseite 4 des Rohres 3 befindet sich ein Transportschlitten 5, der über eine von einem Motor 6 angetriebene Schubstange 7 in horizontaler Richtung verfahrbar ist. Auf dem Transportwagen 5 ist eine Lasermesseinrichtung 8 angeordnet, die hier einen um die eigene Achse rotierenden Sensorkopf 9 aufweist. Der rotierende Sensorkopf 9 arbeitet vorzugsweise mit einer Laserdiode, die einen Laser-Lichtpunkt bzw. einen Laser-Lichtstrahl 10 aussendet. Desweiteren ist in dem Sensorkopf 9 ein hier nicht dargestellter Empfänger integriert.

An der linken Stirnseite 11 des Rohres 3 ist stationär ein in der Höhe verstellbarer Lasertracker 12 angeordnet, der über ein Tracking-Interferometer einen Laserstrahl 13 aussendet, der von einem am Sensorkopf 9 angeordneten Reflektor 14 zurück zum Lasertracker 12 reflektiert wird, wie durch Pfeil 16 angedeutet.

Zur optischen und berührungslosen Vermessung der Innenkontur 15 des Rohres 3 wird der mit der Lasermesseinrichtung 8 bestückte Transportschlitten 5 über die durch den Motor 6 angetriebene Schubstange 7 in horizontaler Richtung in das Rohr 3 hineinbewegt. Einhergehend damit rotiert der Sensorkopf 9 um seine eigene Achse, wobei der von der Laserdiode emmitierte Laser-Lichtstrahl 10 kontinuierlich oder schrittweise, beispielsweise zum Scannen der Innenschweißnaht eines längsnahtgeschweißten Rohres, die Innenkontur 15 überstreicht. Der von der Innenwandung und somit der Innenkontur 15 reflektierte Laser-Lichtpunkt oder Laser-Lichtstrahl 10 wird von dem Positionsdetektor im Sensorkopf 9 empfangen und vermessen.

Der empfangene und vermessene Laser-Lichtpunkt bzw. Laser-Lichtstrahl 10 kann dann, beispielsweise auf einer optischen Bilderfassungseinheit, abgebildet werden, wodurch die Darstellung der Innenkontur 15 des Rohres 3 ermöglicht wird.

Zur fortlaufenden Verfolgung des rotierenden Sensorkopfes 9 und zu seiner koordinativen Positionsbestimmung innerhalb des Rohres 3 ist der dem Sensorkopf 9 in fixer Position linear gegenüberliegende Lasertracker 12 vorgesehen, dessen Laserstrahl 13 den Reflektor 14 des Sensorkopfes 9 verfolgt, so dass Abweichungen des Sensorkopfes 9 von der Geradheit erfasst werden.

Durch die fortlaufende Zielverfolgung (Tracking) des Sensorkopfes 9 und die Erfassung der Entfernung des Sensorkopfes 9 fortlaufend relativ zum Lasertracker 12 kann eine dreidimensionale Vermessung und Darstellung des Rohres 3 auf einer optischen Bilderfassungseinheit ermöglicht werden, die Aufschluss über die Geradheit bzw. Krümmung und die Rundheit bzw. Ovalität des Rohres 3 gibt.

### Bezugszeichenliste:

- 1: Messstation
- 2: Lagerbock
- 3: Rohr
- 4: rechte Stirnseite
- 5: Transportmittel /-schlitten oder dergleichen Fahrzeug
- 6: Motor
- 7: Schubmittel / -stange
- 8: Lasermesseinrichtung
- 9: Sensormittel / Sensorkopf
- 10: Laser-Lichtstrahl
- 11: linke Stirnseite
- 12: Lasertracker
- 13: Laserstrahl
- 14: Reflektor
- 15: Innenkontur
- 16: Pfeil

## Patentansprüche

1. Verfahren zur optischen Innen-Vermessung eines durch Walzen hergestellten nahtlosen Rohres oder eines aus zu Halbschalen umgeformten Blechtafeln oder aus einer umgeformten Blechtafel oder aus einem vom Coil abgewickelten Metallband hergestellten längsnahtgeschweißten Rohres, umfassend ein im Inneren des Rohres (3) einen Laserstrahl (10) aussendendes Sensormittel (9) und einen Lasertracker (12), wobei das Sensormittel (9) durch das Rohr (3) hindurch horizontal verfahren wird, und wobei der vom Sensormittel (9) emmitierte Laserstrahl (10) die Innenkontur (15) des Rohres (3) überstreicht, **dadurch gekennzeichnet, dass** die Innenkontur (15) des Rohres (3) vermessen wird, indem ein am Verfahrwegende in fixer Position dem Sensormittel (9) linear gegenüberliegend vorgesesehener Lasertracker (12) mit seinem Laserstrahl (13) die jeweilige Position des Sensormittels (9) im Raum des Rohres (3) verfolgt und Abweichungen des Sensormittels (9) von der Geradheit erfasst, wobei der Laserstrahl (13) von einem am Sensormittel (9) angeordneten Reflektor (14) zurück zum Lasertracker (12) reflektiert wird.

2. Verfahren nach Anspruch 1,
**dadurch gekennzeichnet,**
**dass** bei einem längsnahtgeschweißten Rohr (3) mittels des verfahrenbaren Sensormittels (9) gleichzeitig die Kontur der Innenschweißnaht vermessen wird.

## Claims

1. Method for optical internal surveying of a seamless pipe produced by rolling or a longitudinal seam welded pipe produced from sheet metal plates reshaped to form half shells or from a reshaped sheet metal plate or from a metal strip unwound from a coil, comprising sensor means (9) emitting a laser beam (10) in the interior of the pipe (3) and a laser tracker (12), wherein the sensor meals (9) is moved horizontally through the pipe (3) and wherein the laser beam (10) emitted by the sensor means (9) scans the internal contour (15) of the pipe (3), **characterised in that** the internal contour (15) of the pipe (3) is surveyed **in that** a laser tracker (12), which is provided at the end of the travel path in fixed position linearly opposite the sensor means (9), tracks by its laser beam (13) the respective position of the sensor means (9) in the space of the pipe (3) and detects deviations of the sensor means (9) from rectilinearity, wherein the laser beam (13) is reflected back to the laser tracker (12) by a reflector (14) arranged at the sensor means (9).

2. Method according to claim 1, **characterised in that** in the case of a longitudinal seam welded pipe (3) the contour of the internal weld seam is simultaneously surveyed by means of the movable sensor means (9).

## Revendications

1. Procédé pour la mesure optique interne d'un tube sans soudure obtenu par laminage ou d'un tube soudé à la molette en direction longitudinale obtenu à partir de plaques de tôle façonnées pour obtenir des demi-coquilles ou à partir d'une plaque de tôle façonnée ou à partir d'une bande métallique déroulée d'une bobine, comprenant un moyen de détection (9) qui émet un faisceau laser (10) à l'intérieur du tube (3) et un appareil de poursuite laser (12), le moyen de détection (9) se déplaçant à l'horizontale à travers tout le tube (3), et dans lequel le faisceau laser (10) émis par le moyen de détection (9) balaie le contour interne (15) du tube (3), **caractérisé en ce qu'**on mesure le contour interne (15) du tube (3) en faisant en sorte qu'un appareil de poursuite laser (12) prévu à l'opposé en direction linéaire du moyen de détection (9), en position fixe à l'extrémité du parcours de déplacement, suit, avec son faisceau laser (13) la position respective du moyen de détection (9) dans l'espace du tube (3) et enregistre des déviations du moyen de détection (9) par rapport à la linéarité, le faisceau laser (13) étant réfléchi en retour en direction de l'appareil de poursuite laser (12) par un réflecteur (14) disposé contre le moyen de détection.

2. Procédé selon la revendication 1, **caractérisé en ce que**, dans le cas d'un tube (3) soudé à la molette en direction longitudinale, on mesure, à l'aide du moyen de détection mobile (9), de manière simultanée, le contour du cordon de soudure interne.
